# EUROPEAN PATENT APPLICATION

(11) **EP 2 466 670 A1**
(43) Date of publication of application: **20.06.2012**
(21) Application number: 10804592.3
(22) Date of filing: 29.07.2010
(51) Int. Cl.: H01M 4/38, H01G 9/058, H01M 4/36, H01M 4/587, H01G 9/00, H01G 9/22

(54) **ELECTRODE ACTIVE MATERIAL, ELECTRODE, AND ELECTRICITY STORAGE DEVICE**

(30) Priority: 31.07.2009 JP 2009180186
(71) Applicant: Dow Corning Toray Co., Ltd., Tokyo 100-0005 (JP)
(72) Inventor: HARIMOTO, Yukinari, Ichihara-shi Chiba 299-0108 (JP); FUKUI, Hiroshi, Ichihara-shi Chiba 299-0108 (JP); HINO, Takakazu, Ichihara-shi Chiba 299-0108 (JP)
(74) Representative: Thomson, Craig Richard
(86) International application number: PCT/JP2010/063237
(87) International publication number: WO 2011/013855

(57) **Abstract**

An electrode active material comprising a silicon-containing carbon-based composite material obtained by: preparing a cured product of (A) a silicon-free organic compound having a crosslinkable group, and (B) a silicon-containing compound capable of crosslinking the component (A); and baking the cured product in an inert gas or in a vacuum at 300 to 1,500°C; an electrode comprising the electrode active material; and an electricity storage device comprising the electrode. The electrode active material has high reversible capacity and stable charge and discharge cycle characteristics, has little electrical potential loss when lithium is discharged, and furthermore, can be manufactured via a simple manufacturing process. Therefore, an electrode active material that is particularly suitable for an electrode of a lithium secondary battery can be provided, and an electricity storage device having an electrode comprising the electrode active material can also be provided.

## Description

### TECHNICAL FIELD

The present invention relates to an electrode active material, an electrode containing the active material, and an electricity storage device including the electrode.

### BACKGROUND ART

Electricity storage devices and particularly lithium secondary batteries are being investigated as a type of high energy density secondary battery. In many cases, a silicon-containing carbon material obtained by pyrolyzing a silicon polymer is used as a negative electrode material of such lithium secondary batteries. For example, Japanese Unexamined Patent Application Publication H10-97853 and Solid State Ionics, 122, 71 (1999) describe fabricating an electrode usable in the manufacturing of a battery having a large capacity, low irreversible capacity, high density, and excellent safety behavior by using a polysilane and a coal tar pitch as precursors. Additionally, Japanese Unexamined Patent Application Publication H10-74506, Japanese Unexamined Patent Application Publication 2004-273377, and J. Electrochem. Soc., 144, 2410 (1997) describe obtaining a battery having a large capacity, low irreversible capacity, high density, and excellent safety behavior by pyrolyzing a siloxane polymer and, thereafter, introducing lithium in order to form an electrode for a lithium secondary battery.

However, such lithium secondary batteries that comprise an electrode including a silicon-containing carbon material have a problem in that practical performance is insufficient with regards to charge and discharge cycle characteristics and the like.

### Prior Art Documents

### Patent Documents

Patent Document 1: Japanese Unexamined Patent Application Publication No. H10-97853
Patent Document 2: Japanese Unexamined Patent Application Publication No. H10-74506
Patent Document 3: Japanese Unexamined Patent Application Publication No. 2004-273377

### Non-Patent Documents

Non-Patent Document 1: Solid State Ionics, 122, 71 (1999)
Non-Patent Document 2: J. Electrochem. Soc., 144, 2410 (1997)

### DISCLOSURE OF THE INVENTION

An object of the present invention is to provide an electrode active material, an electrode containing the active material, and an electricity storage device including the electrode suitable for use as an electrode of an electricity storage device, particularly for a lithium secondary battery.

The electrode active material of the present invention comprises a silicon-containing carbon-based composite material obtained by: preparing a cured product by crosslinking (A) a silicon-free organic compound having a crosslinkable group, and (B) a silicon-containing compound capable of crosslinking the component (A); and baking the cured product in an inert gas or in a vacuum at 300 to 1,500°C.

The silicon-containing carbon-based composite material is preferably obtained by baking a mixture comprising the cured product and (C) carbon or an organic material that is carbonized by heating or, alternately by baking a cured product obtained by crosslinking a mixture comprising the component (A), the component (B), and the component (C).

The electrode of the present invention is characterized by comprising the electrode active material, and the electricity storage device of the present invention is characterized by comprising the electrode.

The electrode active material of the present invention has high reversible capacity and stable charge and discharge cycle characteristics, has little electrical potential loss when lithium is discharged, and furthermore, uses inexpensive raw materials, and can be manufactured via a simple manufacturing process. Therefore, the electrode active material of the present invention is suitable for an electrode of an electricity storage device and particularly for a lithium secondary battery. The electrode of the present invention imparts high reversible capacity and stable charge and discharge cycle characteristics to the battery. The electricity storage device of the present invention has high reversible capacity and stable charge and discharge cycle characteristics.

### BRIEF DESCRIPTION OF THE DRAWINGS

FIG. 1 illustrates a lithium secondary battery that is an example of the electricity storage device of the present invention.
FIG. 2 illustrates another lithium secondary battery that is an example of the electricity storage device of the present invention.
FIG. 3 shows a charge and discharge curve of the lithium secondary battery of Practical Example 2.

### REFERENCE NUMERALS

1: Molecular sieve, 2: Positive electrode, 3: Negative electrode, 4: Separator, 5: Polypropylene plate, 6: Polypropylene filler, 7: Electrolyte solution, 8: Current collector, 9: Case, 10: Insulating packing, 11: Positive electrode, 12: Separator, 13: Negative electrode, 14: Current collector

### DETAILED DESCRIPTION OF THE INVENTION

### Electrode Active Material

The electrode active material of the present invention comprises a silicon-containing carbon-based composite material obtained by: preparing a cured product by crosslinking (A) a silicon-free organic compound having a crosslinkable group, and (B) a silicon-containing compound capable of crosslinking the component (A); and baking the cured product in an inert gas or in a vacuum at 300 to 1,500°C.

The component (A) is a silicon-free organic compound having a crosslinkable group. Examples of the crosslinkable group in said compound include aliphatic unsaturated groups, epoxy groups, acryl groups, methacryl groups, amino groups, hydroxyl groups, mercapto groups, and halogenated alkyl groups. Specific examples of the aliphatic unsaturated groups include vinyl groups, propenyl groups, butenyl groups, pentenyl groups, hexenyl groups, and similar alkenyl groups; acetyl groups, propynyl groups, pentynyl groups, and similar alkynyl groups. Specific examples of the epoxy groups include glycidyl groups, glycidoxy groups, epoxycyclohexyl groups, 3-glycidoxypropyl groups, and 2-(3,4-epoxycyclohexyl) ethyl groups. Specific examples of the acryl groups include 3-acryloxypropyl groups. Specific examples of the methacryl groups include 3-methacryloxypropyl groups. Specific examples of the amino groups include 3-aminopropyl groups, and N-(2-aminoethyl)-3-aminopropyl groups. Specific examples of the hydroxyl groups include hydroxyethyl groups, hydroxypropyl groups, and similar hydroxyalkyl groups; and hydroxyphenyl groups and similar hydroxyaryl groups. Specific examples of the mercapto groups include 3-mercaptopropyl groups. Specific examples of the halogenated alkyl groups include 3-chloropropyl groups.

Note that the component (A) may be mixture of an organic compound having one crosslinkable group in a molecule and an organic compound having at least two crosslinkable groups in a molecule. In this case, a content of the latter compound in the mixture is not particularly limited, but, from the perspective of obtaining excellent crosslinkage, the content is preferably at least 15 wt.% and more preferably is 30 wt.%.

Particularly, the component (A) is preferably an organic compound having at least one aromatic ring in a molecule because forming a graphene structure is facilitated due to excellent efficiency when carbonizing by heating.

Examples of the component (A) described above include silicon-free aliphatic hydrocarbon compounds having a crosslinkable group at a molecular terminal and/or in the side molecular chains; silicon-free aliphatic hydrocarbon compounds having a crosslinkable group at a molecular terminal and/or in the side molecular chains and hetero-atoms other than carbon atoms, such as, for example, nitrogen, oxygen, or boron atoms, in the molecular chain; silicon-free aromatic hydrocarbon compounds having a crosslinkable group in the molecule; and silicon-free cyclic fatty compounds having a crosslinkable group in the molecule and also hetero-atoms other than carbon atoms, such as, for example, nitrogen, oxygen, or boron atoms.

Specific examples of the aliphatic hydrocarbon compounds include compounds expressed by the following formulae:

R¹-(CH₂)ₘ-R¹

CH₃-(CH₂)ₘ-(CHR¹)ₙ-CH₃

CH₃-(CH₂)ₘ-(CH=CH)ₙ-CH₃

CH₃-(CH₂)ₘ-(C=C)ₙ-CH₃

R¹-O(CH₂CH₂O)ₘ(CH₂CH₂CH₂O)ₙ-R¹

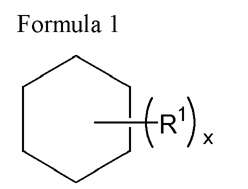

In the formulae, R¹ represents a crosslinkable group, and examples thereof include aliphatic unsaturated groups, epoxy groups, acryl groups, methacryl groups, amino groups, hydroxyl groups, mercapto groups, and halogenated alkyl groups. Specific examples are the same as the groups described above. Additionally, "m" and "n" are integers greater than or equal to 1; and "x" is an integer greater than or equal to 1.

Specific examples of the aromatic hydrocarbon compound include compounds expressed by the following general formula:

(R¹)ₓR²

In this formula, R¹ represents a crosslinkable group, and examples thereof are the same as the groups described above. Additionally, "x" is an integer greater than or equal to 1. R² represents an aromatic group with "x"-valency. Specifically, in this formula, when "x" is 1, R² represents a monovalent aromatic group, and specific examples thereof include the groups described below.

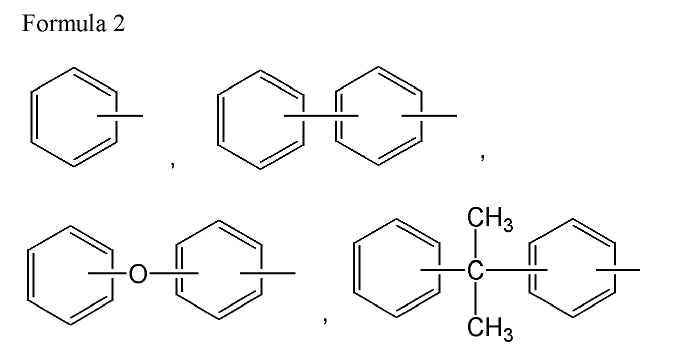

Specific examples of the aromatic hydrocarbon compound described above include α- of β-methylstyrene, α- or β-ethylstyrene, methoxystyrene, phenylstyrene, chlorostyrene, o-, m-, or p-methylstyrene, ethylstyrene, methylsilylstyrene, hydroxystyrene, cyanostyrene, nitrostyrene, aminostyrene, carboxystyrene, sulfoxystyrene, sodium styrenesulfonate, vinylpyridine, vinylthiophene, vinylpyrrolidone, vinylnaphthalene, vinylanthracene, and vinylbiphenyl.

Additionally, in the formula, when "x" is 2, R² represents a bivalent aromatic group, and specific examples thereof include the groups described below.

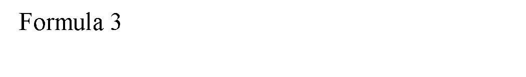

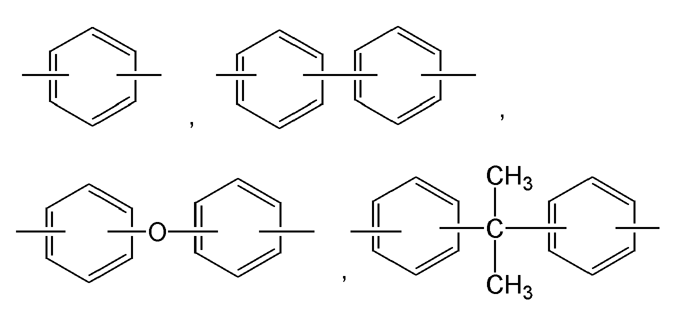

Specific examples of the aromatic hydrocarbon compound described above include divinylbenzene, divinylbiphenyl, vinylbenzylchloride, divinylpyrindine, divinylthiophene, divinylpyrrolidone, divinylnaphthalene, divinylxylene, divinylethylbenzene, and divinylanthracene. The aromatic hydrocarbon compound is preferably divinylbenzene because the pyrolyzing characteristics of the obtained cured product will be superior.

Additionally, in the formula, when "x" is 3, R² represents a trivalent aromatic group, and specific examples thereof include the groups described below. 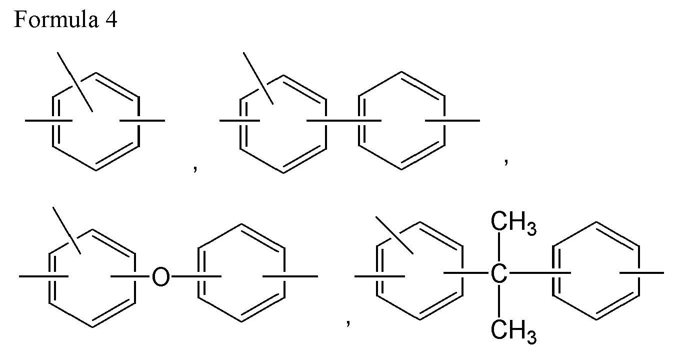 Specific examples of the aromatic hydrocarbon compound described above include trivinylbenzene and trivinylnaphthalene.

Additionally, specific examples of the aromatic compound comprising hetero-atoms include aromatic compounds expressed by the following formula: 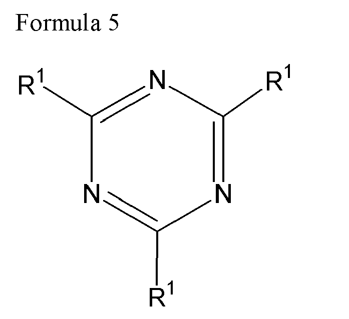 In this formula, R¹ represents a crosslinkable group, and examples thereof are the same as the groups described above.

Additionally, specific examples of the cyclic compound comprising hetero-atoms include cyclic compounds expressed by the following formula: 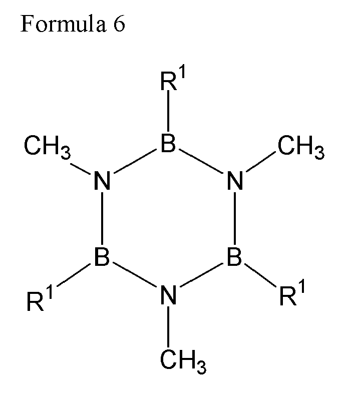 In this formula, R¹ represents a crosslinkable group, and examples thereof are the same as the groups described above.

The component (A) may be one type of the silicon-free organic compound described above or may be a mixture of two or more types; and furthermore, may comprise a nitrogen-containing monomer such as acrylonitrile or the like as another component. In this case, a content of the nitrogen-containing monomer is preferably not more than 50 wt.%, and more preferably is in a range of 10 to 50 wt.%.

The component (B) is a silicon-containing compound capable of crosslinking the component (A). Examples of the component (B) described above include siloxanes, silanes, silazanes, carbosilane, and mixtures thereof. Specific examples include monomers, oligomers, or polymers having Si-O-Si bonds, and similar siloxanes; monomers, oligomers, or polymers having silane and Si-Si bonds, and similar silanes; monomers, oligomers, or polymers having Si-(CH₂)ₙ-Si bonds, and similar silalkylenes; monomers, oligomers, or polymers having Si-(C₆H₄)ₙ-Si or Si-(CH₂CH₂C₆H₄CH₂CH₂)ₙ-Si bonds, and similar silarylenes; monomers, oligomers, or polymers having Si-N-Si bonds, and similar silazanes; silicon-containing copolymer compounds having at least two types of bonds selected from Si-O-Si bonds, Si-Si bonds, Si-(CH₂)ₙ-Si bonds, Si-(C₆H₄)ₙ-Si bonds, and Si-N-Si bonds; and mixtures thereof. Note that in the formula, "n" is an integer greater than or equal to 1.

The siloxanes are expressed by the following average unit formula:

(R³₃SiO_{1/2})ₐ(R³₂SiO_{2/2})_{b}(R³SiO_{3/2})_{c}(SiO_{4/2})_{d}

In this formula, R³ may be the same or different and are selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups; "a", "b", "c", and "d" are numbers that are greater than or equal to 0 and less than or equal to 1, and that satisfy a + b + c+ d = 1; however, "a", "b" and "c" cannot be 0 at the same time.

Specific examples of the monovalent hydrocarbon groups represented by R³ include alkyl groups, alkenyl groups, aralkyl groups, and aryl groups. The alkyl groups are preferably alkyl groups having 1 to 12 carbon atoms and more preferably alkyl groups having 1 to 6 carbon atoms. The alkyl groups may be any of the following: straight or branched chain alkyl groups, cycloalkyl groups, or cycloalkylene groups (alkyl groups that combine straight or branched chain alkylene groups (preferably methylene groups, ethylene groups, or similar alkylene groups having 1 to 6 carbon atoms) with carbon rings (preferably rings having 3 to 8 carbon atoms)). The straight or branched chain alkyl groups preferably have 1 to 6 carbon atoms and specific examples thereof include methyl groups, ethyl groups, n-propyl groups, isopropyl groups, butyl groups, t-butyl groups, pentyl groups, and hexyl groups. The cycloalkyl groups preferably have 4 to 6 carbon atoms and specific examples thereof include cyclobutyl groups, cyclopentyl groups, and cyclohexyl groups. The alkenyl groups preferably have 2 to 12 carbon atoms, and more preferably 2 to 6 carbon atoms. Specific examples of the alkenyl groups having from 2 to 6 carbons include vinyl groups, propenyl groups, butenyl groups, pentenyl groups, and hexenyl groups, of which vinyl groups are preferable. The aralkyl groups preferably have 7 to 12 carbon atoms. Specific examples of the aralkyl groups with 7 to 12 carbon atoms include benzyl groups, phenethyl groups, and phenylpropyl groups. The aryl groups preferably have 6 to 12 carbon atoms and specific examples thereof include phenyl groups, naphthyl groups, and tolyl groups. The monovalent hydrocarbon groups may have substituents. Specific examples of such substituents include fluorine atoms, chlorine atoms, bromine atoms, iodine atoms, or other halogens; hydroxyl groups; methoxy groups, ethoxy groups, n-propoxy groups, isopropoxy groups, or similar alkoxy groups. Specific examples of such substituted monovalent hydrocarbon groups include 3-chloropropyl groups, 3,3,3-trifluoropropyl groups, perfluorobutylethyl groups, and perfluorooctylethyl groups.

Specific examples of the halogen atoms represented by R³ include fluorine atoms, chlorine atoms, bromine atoms, and iodine atoms, of which chlorine atoms are preferable.

Specific examples of the epoxy group-containing organic groups represented by R³ include 3-glycidoxypropyl groups, 4-glycidoxybutyl groups, or similar glycidoxyalkyl groups; 2-(3,4-epoxycyclohexyl)-ethyl groups, 3-(3,4-epoxycyclohexyl)-propyl groups, or similar epoxycyclohexylalkyl groups; 4-oxiranylbutyl groups, 8-oxiranyloctyl group, or similar oxiranylalkyl groups. Glycidoxyalkyl groups are preferable and 3-glycidoxypropyl groups are particularly preferable.

Specific examples of the acryl group- or methacryl group-containing organic groups represented by R³ include 3-acryloxypropyl groups, 3-methacryloxypropyl groups, 4-acryloxybutyl groups, and 4-methacryloxybutyl groups, of which 3-methacryloxypropyl groups are preferable.

Specific examples of the amino group-containing organic groups represented by R³ include 3-aminopropyl groups, 4-aminobutyl groups, N-(2-aminoethyl)-3-aminopropyl groups, of which 3-aminopropyl groups and N-(2-aminoethyl)-3-aminopropyl groups are preferable.

Specific examples of the mercapto group-containing organic groups represented by R³ include 3-mercaptopropyl groups and 4-mercaptobutyl groups.

Specific examples of the alkoxy groups represented by R³ include methoxy groups, ethoxy groups, n-propoxy groups, and isopropoxy groups, of which methoxy groups and ethoxy groups are preferable.

At least two groups represented by R³ in one molecule are the following: alkenyl groups, hydrogen atoms, halogen atoms, epoxy group-containing organic groups, acryl group- or methacryl group-containing organic groups, amino group-containing organic groups, mercapto group-containing organic groups, alkoxy groups, or hydroxy groups.

Furthermore, "a", "b", "c", and "d" are numbers that are greater than or equal to 0 and less than or equal to 1, and that satisfy a + b + c+ d = 1. However, "a", "b", and "c" cannot be equal to 0 altogether at the same time.

The siloxanes described above should contain in its structure at least one of the structural units expressed by the following: (R³₃SiO_{1/2}), (R³₂SiO_{2/2}), (R³SiO_{3/2}) and (SiO_{4/2}). Examples thereof include a straight chain polysiloxane consisting of (R³₃SiO_{1/2}) and (R³₂SiO_{2/2}) units; a cyclic polysiloxane consisting of (R³₂SiO_{2/2}) units; a branched chain polysiloxane consisting of (R³SiO_{3/2}) or (SiO_{4/2}) units; a polysiloxane consisting of (R³₃SiO_{1/2}) and (R³SiO_{3/2}) units; a polysiloxane consisting of (R³₃SiO_{1/2}) and (SiO_{4/2}) units; a polysiloxane consisting of (R³SiO_{3/2}) and (SiO_{4/2}) units; a polysiloxane consisting of (R³₂SiO_{2/2}) and (R³SiO_{3/2}) units; a polysiloxane consisting of (R³₂SiO_{2/2}) and (SiO_{4/2}) units; a polysiloxane consisting of (R³₃SiO_{1/2}), (R³₂SiO_{2/2}), and (R³SiO_{3/2}) units; a polysiloxane consisting of (R³₃SiO_{1/2}), (R³₂SiO_{2/2}), and (SiO_{4/2}) units; a polysiloxane consisting of (R³₃SiO_{1/2}), (R³SiO_{3/2}), and (SiO_{4/2}) units; a polysiloxane consisting of (R³₂SiO_{2/2}), (R³SiO_{3/2}), and (SiO_{4/2}) units; and a polysiloxane consisting of (R³₃SiO_{1/2}), (R³₂SiO_{2/2}), (R³SiO_{3/2}), and (SiO_{4/2}) units; and similar structural units. The number of repetitions of the structural units expressed by each of (R³₃SiO_{1/2}), (R³₂SiO_{2/2}), (R³SiO_{3/2}), and (SiO_{4/2}) is preferably within a range of 1 to 10,000, more preferably within a range of 1 to 1,000, and even more preferably within a range of 3 to 500.

The siloxanes described above can be prepared by methods known in the art. The method for preparing these siloxanes is not particularly limited, but the most general methods include hydrolysis of organochlorosilanes. These and other methods are disclosed by Noll in, Chemistry and Technology of Silicones, Chapter 5 (Translated 2nd German Issue, Academic Press, 1968).
The siloxanes described above may be silicon-containing copolymer compounds with polymers. Examples of silicon-containing copolymer compounds that can be used as the siloxanes include silicon-containing copolymer compounds having Si-O-Si and Si-Si bonds; silicon-containing copolymer compounds having Si-O-Si and Si-N-Si bonds; silicon-containing copolymer compounds having Si-O-Si bonds and Si-(CH₂)ₙ-Si bonds; silicon-containing copolymer compounds having Si-O-Si bonds and Si-(C₆H₄)ₙ-Si bonds or Si-(CH₂CH₂C₆H₄CH₂CH₂)ₙ-Si bonds; and the like. In the formulae, "n" has the same meaning as defined above.

Furthermore, the silanes can be expressed by the following general formula:

R³₄Si,

or by the following average unit formula:

(R³₃Si)ₐ(R³₂Si)_{b}(R³Si)_{c}(Si)_{d}

In this formula, R³ may be the same or different and are selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups. However, at least one R³ in a molecule comprises an alkenyl group, a hydrogen atom, a halogen atom, an epoxy group-containing organic group, an acryl group- or methacryl group-containing organic group, an amino-containing organic group, a mercapto-containing organic group, an alkoxy group, or a hydroxy group. "a", "b", "c", and "d" are numbers that are greater than or equal to 0 and are less than or equal to 1, and that satisfy "a + b + c+ d = 1". However, "a", "b" and "c" cannot be 0 altogether at the same time.
In the above formula, "R¹" and "a", "b", "c", and "d" are the same as defined above.

The silanes are expressed by the general formula: R³₄Si, or structured from at least one structure unit selected from (R³₃Si), (R³₂Si), (R³Si), and (Si). Specific examples include a straight chain polysilane consisting of (R³₃Si) and (R³₂Si) units; a cyclic polysilane consisting of (R³₂Si) units; a branched chain polysilane (polysiline) consisting of (R³Si) or (Si) units; a polysilane consisting of (R³₃Si) and (R³Si) units; a polysilane consisting of (R³₃Si) and (Si) units; a polysilane consisting of (R³Si) and (Si) units; a polysilane consisting of (R³₂Si) and (R³Si) units; a polysilane consisting of (R³₂Si) and (Si) units; a polysilane consisting of (R³₃Si), (R³₂Si), and (R³Si) units; a polysilane consisting of (R³₃Si), (R³₂Si) and (Si) units; a polysilane consisting of (R³₃Si), (R³Si), and (Si) units; a polysilane consisting of (R³₂Si), (R³Si), and (Si) units; a polysilane consisting of (R³₃Si), (R³₂Si), (R³Si), and (Si) units; and similar structural units. The number of repetitions of the structural units expressed by each of (R³₃Si), (R³₂Si), (R³Si) and (Si) is preferably within a range of 2 to 10,000, more preferably within a range of 3 to 1,000, and even more preferably within a range of 3 to 500.

The silanes described above can be manufactured by methods known in the art. Examples of methods thereof include the method comprising dehalogenation of halosilanes in the presence of an alkali metal described in the Journal of American Chemical Society, 11, 124 (1988); Macromolecules, 23, 3423 (1990), etc.; the method comprising anionic polymerization of disilenes described in Macromolecules, 23, 4494 (1990), etc.; the method comprising dehalogenation of halosilanes via electrode reduction described in J. Chem. Soc., Chem. Commun., 1161 (1990); J. Chem. Soc., Chem. Commun., 897 (1992), etc; the method comprising dehalogenation of halosilanes in the presence of magnesium (see WO98/29476, etc.); the method comprising dehydration of hydrosilanes in the presence of metal catalysts (see Kokai H4-334551, etc.), and other methods.

The silanes described above may be silicon-containing copolymer compounds with other polymers. Examples of silicon-containing copolymer compounds that can be used as the silanes include silicon-containing copolymer compounds having Si-Si bonds and Si-O-Si bonds; silicon-containing copolymer compounds having Si-Si bonds and Si-N-Si bonds; silicon-containing copolymer compounds having Si-Si bonds and Si-(CH₂)ₙ-Si bonds; silicon-containing copolymer compounds having Si-Si bonds and Si-(C₆H₄)ₙ-Si bonds or Si-(CH₂CH₂C₆H₄CH₂CH₂)ₙ-Si bonds; and the like.

Examples of other silanes include silicon-containing compounds expressed by the general formula:

[(R⁶)₂HSi]ₑR⁷

In this formula, R⁶ moieties are substituted or unsubstituted monovalent hydrocarbon groups that may be the same or different. "e" is an integer that is greater than or equal to 2. R⁷ is an organic group with "e"-valency.
In this formula, examples of the monovalent hydrocarbon groups represented by R⁶ are the same as the monovalent hydrocarbon groups described as examples for R³. "e" is an integer greater than or equal to 2, preferably an integer in a range of 2 to 6. When R⁷ is an "e"-valent organic group and "e" is equal to 2, R⁷ is a bivalent organic group. Specific examples thereof include alkylene groups, alkenylene groups, alkyleneoxyalkylene groups, arylene groups, aryleneoxyarylene groups, and arylene-alkylene-arylene groups. Even more specific examples include the groups expressed by the following formulae:

-CH₂CH₂-, -CH₂CH₂CH₂-, -CH₂CH(CH₃)-, -CH=CH- ,-C≡C-, -CH₂CH₂OCH₂CH₂-, -

CH₂CH₂CH₂OCH₂CH₂-,

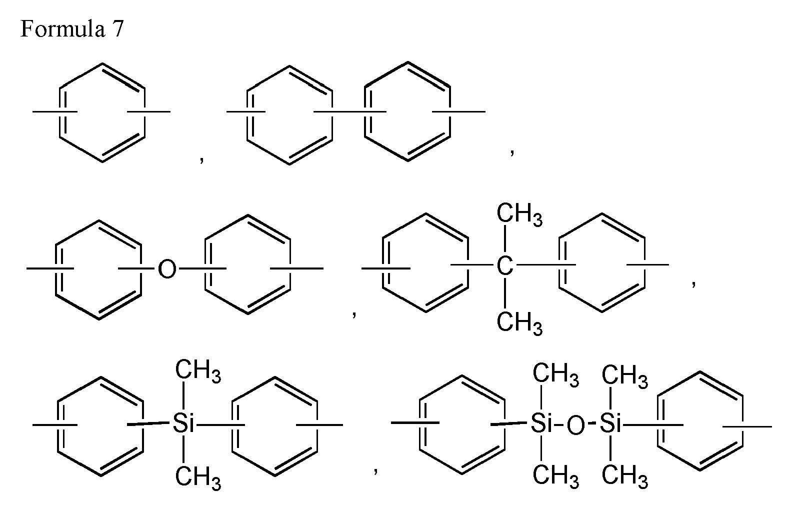

When "e" is equal to 3, R⁷ is a trivalent organic group. Specific examples thereof include the groups expressed by the following formulae:

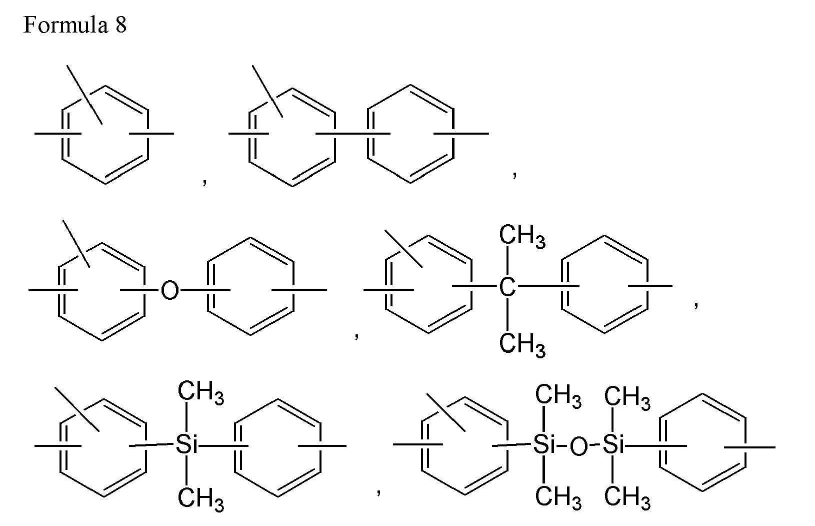

The silazanes are represented, for example, by the following average unit formula:

(R³₃SiNR⁴)ₐ(R³₂SiNR⁴)_{b}(R³SiNR⁴)_{c}(SiNR⁴)_{d}

In this formula, R³ may be the same or different and are selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups. However, at least one R³ in a molecule comprises an alkenyl group, a hydrogen atom, a halogen atom, an epoxy group-containing organic group, an acryl group- or methacryl group- containing organic group, an amino-containing organic group, a mercapto-containing organic group, an alkoxy group, or a hydroxy group. R² is a hydrogen atom, or a substituted or unsubstituted monovalent hydrocarbon group. "a", "b", "c", and "d" are numbers that are greater than or equal to 0 and are less than or equal to 1, and that satisfy "a + b + c+ d = 1". However, "a", "b" and "c" cannot be 0 altogether at the same time.
In the above formula, "R³", and "a" "b", "c", and "d" are the same as defined above. Examples of the monovalent hydrocarbon groups represented by R⁴ are the same as the examples of the monovalent hydrocarbon groups represented by R³. The moieties represented by R⁴ are preferably hydrogen atoms or alkyl groups, and more preferably are methyl groups or hydrogen atoms.

The silazanes comprise at least one of the structural units expressed by (R³₃SiNR⁴), (R³₂SiNR⁴), (R³SiNR⁴), and (SiNR⁴). Examples thereof include a straight chain polysilazane consisting of (R³₃SiNR⁴) and (R³₂SiNR⁴) units, a cyclic polysilazane consisting of (R³₂SiNR⁴) units; a branched chain polysilazane consisting of (R³SiNR⁴) or (SiNR⁴) units; a polysilazane consisting of (R³₃SiNR⁴) and (R³SiNR⁴) units; a polysilazane consisting of (R³₃SiNR⁴) and (SiNR⁴) units; a polysilazane consisting of (R³SiNR⁴) and (SiNR⁴) units; a polysilazane consisting of (R³₂SiNR⁴) and (R³SiNR⁴) units; a polysilazane consisting of (R³₂ SiNR⁴) and (SiNR⁴) units; a polysilazane consisting of (R³₃SiNR⁴), (R³₂SiNR⁴), and (R³SiNR⁴) units; a polysilazane consisting of (R³₃SiNR⁴), (R³₂SiNR⁴), and (SiNR⁴) units; a polysilazane consisting of (R³₃SiNR⁴), (R³SiNR⁴), and (SiNR⁴) units; a polysilazane consisting of (R³₂SiNR⁴), (R³SiNR⁴), and (SiNR⁴) units; a polysilazane consisting of (R³₃SiNR⁴), (R³₂SiNR⁴), (R³SiNR⁴), and (SiNR⁴) units; and similar structural units. The number of repetitions of the structural units expressed by each of (R³₃SiNR⁴), (R³₂SiNR⁴), (R³SiNR⁴), and (SiNR⁴) is preferably within a range of 2 to 10,000, more preferably within a range of 3 to 1,000, and even more preferably within a range of 3 to 500.

The silazanes described above can be prepared by methods known in the art. Examples of methods for preparing the silazanes include those methods described in U. S. Patent Nos. 4312970, 4340619, 4395460, 4404153, 4482689, 4397828, 4540803, 4543344, 4835238, 4774312, 4929742, and 4916200. Other information reported by Burns, et al. can be found in J. Mater. Sci., 22 (1987), pp. 2609-2614.

The silazanes described above may be silicon-containing copolymer compounds with other polymers. Examples of silicon-containing copolymer compounds that can be used as the polysilazanes include silicon-containing copolymer compounds having Si-N-Si and Si-O-Si bonds; silicon-containing copolymer compounds having Si-N-Si and Si-Si bonds; silicon-containing copolymer compounds having Si-N-Si bonds and Si-(CH₂)ₙ-Si bonds; silicon-containing copolymer compounds having Si-N-Si bonds and Si-(C₆H₄)ₙ-Si bonds or Si-(CH₂CH₂C₆H₄CH₂CH₂)ₙ-Si bonds; and the like. In the formulae, "n" has the same meaning as defined above.

The carbosilanes are expressed, for example, by the following average unit formula:

(R³₃SiR⁵)ₐ(R³₂SiR⁵)_{b}(R³SiR⁵)_{c}(SiR⁵)_{d}

In this formula, R³ may be the same or different and are selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups. However, at least one R³ in a molecule comprises an alkenyl group, a hydrogen atom, a halogen atom, an epoxy group-containing organic group, an acryl group- or methacryl group-containing organic group, an amino group-containing organic group, a mercapto group-containing organic group, an alkoxy group, or a hydroxy group. R⁵ is an alkylene group or an arylene group. "a", "b", "c", and "d" are numbers that are greater than or equal to 0 and are less than or equal to 1, and that satisfy "a + b + c+ d = 1". However, "a", "b" and "c" cannot be 0 altogether at the same time. In the above formula, "R³", and "a", "b", "c", and "d" are the same as defined above. The alkylene group represented by R⁵ may be expressed, for example, by the formula: -(CH₂)ₙ-, and the arylene group represented by R⁵ can be expressed, for example, by the formula: -(C₆H₄)ₙ-. In the formulae, "n" has the same meaning as defined above.

The carbosilanes are structured from at least one of the structural units expressed by the following: (R³₃SiR⁵), (R³₂SiR⁵), (R³SiR⁵), and (SiR⁵). Specific examples include a straight chain polycarbosilane consisting of (R³₃SiR⁵) and (R³₂SiR⁵) units; a cyclic polycarbosilane consisting of (R³₂SiR⁵) units; a branched chain polycarbosilane consisting of (R³SiR⁵) or (SiR⁵) units; a polycarbosilane consisting of (R³₃SiR⁵) and (R³SiR⁵) units; a polycarbosilane consisting of (R³₃SiR⁵) and (SiR⁵) units; a polycarbosilane consisting of (R³SiR⁵) and (SiR⁵) units; a polycarbosilane consisting of (R³₂SiR⁵) and (R³SiR⁵) units; a polycarbosilane consisting of (R³₂SiR⁵) and (SiR⁵) units; a polycarbosilane consisting of (R³₃SiR⁵), (R³₂SiR⁵), and (R³SiR⁵) units; a polycarbosilane consisting of (R³₃SiR⁵), (R³₂SiR⁵) and (SiR⁵) units; a polycarbosilane consisting of (R³₃SiR⁵), (R³SiR⁵), and (SiR⁵) units; a polycarbosilane consisting of (R³₂SiR⁵), (R³SiR⁵), and (SiR⁵) units; a polycarbosilane consisting of (R³₃SiR⁵), (R³₂SiR⁵), (R³SiR⁵), and (SiR⁵); and similar structural units. The number of repetitions of the structural units expressed by each of (R³₃SiR⁵), (R³₂SiR⁵), (R³SiR⁵), and (SiR⁵) is preferably within a range of 2 to 10,000, more preferably within a range of 3 to 1,000, and even more preferably within a range of 3 to 500.

The carbosilanes described above can be prepared by methods known in the art. Methods for manufacturing carbosilanes are described, for example, by J. Dunogues, et al. in Macromolecules, 21, 3 (1988), in US Patent No. 3,293,194, by N.S. Nametkin, et al. in Doklady Akademii Nauk SSSR, 28, 1112 (1973), by W.A. Kriner in J. Polym. Sci., Part. A-1, 4, 444 (1966), by N.S. Nametkin, et al. in Doklady Akademii Nauk SSSR, 17, 188(1966), and by C.S. Cundy, C. Eaborn, and M.F. Lappert, in J. Organomet. Chem., 44(2), 291 (1972).

The carbosilanes described above may be silicon-containing copolymer compounds with other polymers. Examples of silicon-containing copolymer compounds that can be used as the carbosilanes include silicon-containing copolymer compounds having Si-(CH₂)ₙ-Si bonds and Si-O-Si bonds; silicon-containing copolymer compounds having Si-(CH₂)ₙ-Si bonds and Si-Si bonds; silicon-containing copolymer compounds having Si-(CH₂)ₙ-Si bonds and Si-N-Si bonds; silicon-containing copolymer compounds having Si-(CH₂)ₙ-Si bonds and Si-(C₆H₄)ₙ-Si bonds; silicon-containing copolymer compounds having Si-(C₆H₄)ₙ-Si bonds and Si-O-Si bonds; silicon-containing copolymer compounds having Si-(C₆H₄)ₙ-Si bonds and Si-Si bonds; silicon-containing copolymer compounds having Si-(C₆H₄)ₙ-Si bonds or Si-(CH₂CH₂C₆H₄CH₂CH₂)ₙ-Si bonds and Si-N-Si bonds; and the like. In the formulae, "n" has the same meaning as defined above.

The component (b) is more preferably a siloxane expressed by the following average unit formula:

(R³₃SiO_{1/2})ₐ(R³₂SiO_{2/2})_{b}(R³SiO_{3/2})_{c}(SiO_{4/2})_{d}

In this formula, R³ may be the same or different and are selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups; "a", "b", "c", and "d" are numbers that are greater than or equal to 0 and less than or equal to 1, and that satisfy a + b + c+ d = 1; however, "a", "b" and "c" cannot be 0 at the same time.

Specific examples of the crosslinking reaction include addition reactions such as a hydrosilylation reaction, a Michael addition reaction, a Diels-Alder reaction, and the like; condensation reactions such as dealcoholization, dehydrogenation, dewatering, deamination, and the like; ring-opening reactions such as epoxy ring-opening, ester ring-opening, and the like; and radical reactions initiated by a peroxide, UV, or the like. Particularly, when the component (A) comprises aliphatic unsaturated groups and the component (B) comprises silicon-bonded hydrogen atoms, a mixture thereof can be hydrosilylation reacted in the presence of a hydrosilylation-reaction catalyst.

Specific examples of the hydrosilylation-reaction catalyst include fine platinum powder, platinum black, fine platinum-carrying silica powder, fine platinum-carrying activated carbon, chloroplatinic acid, platinum tetrachloride, an alcoholic solution of chloroplatinic acid, an olefin complex of platinum, and an alkenylsiloxane complex of platinum. The amount in which the hydrosilylation-reaction catalyst can be used is not particularly limited. However, the catalyst is preferably used in such an amount that, in terms of weight, the content of metal atoms in the catalyst is in a range of 0.1 to 1,000 ppm, and more preferably in a range of 1 to 500 ppm, with respect to a total weight of the component (A) and the component (B).

When the component (A) comprises aliphatic unsaturated groups and the component (B) comprises silicon-bonded hydrogen atoms, the amounts thereof are not particularly limited. However, the content of the silicon-bonded hydrogen atoms in the component (B) is in a range of 0.1 to 50 moles, preferably in a range of 0.1 to 30 moles, and more preferably in a range of 0.1 to 10 moles, per one mole of the aliphatic unsaturated groups in the component (A). A reason for this is because when the amount of the component (B) is less than the lower limit of the range described above, the carbonization yield when baking the obtained cured product will tend to decline. On the other hand, when the amount exceeds the range described above, the characteristics as an electrode active material of the silicon-containing carbon-based composite material obtained by baking the obtained cured product will tend to decline.

When the component (A) comprises aliphatic unsaturated groups and the component (B) comprises aliphatic unsaturated groups, acryl groups, methacryl groups, or silicon-bonded hydrogen atoms, a mixture thereof can be radical reacted by a radical initiator using heat and light.

Specific examples of the radical initiator include dialkyl peroxides, diacyl peroxides, peroxy esters, peroxy dicarbonates, and similar organic peroxides; and organic azo compounds. Specific examples of the organic peroxides include dibenzoyl peroxide, bis-p-chlorobenzoyl peroxide, bis-2,4-dichlorobenzoyl peroxide, di-t-butyl peroxide, dicumyl peroxide, t-butyl perbenzoate, 2,5-bis(t-butyl peroxide)-2,3-dimethylhexane, t-butyl peracetate, bis(o-methylbenzoyl peroxide), bis(m-methylbenzoyl peroxide), bis(p-methylbenzoyl peroxide), 2,3-dimethylbenzoyl peroxide, 2,4-dimethylbenzoyl peroxide, 2,6-dimethylbenzoyl peroxide, 2,3,4-trimethylbenzoyl peroxide, 2,4,6-trimethylbenzoyl peroxide, and similar methyl group-substituted benzoyl peroxides; t-butyl perbenzoate, dicumyl peroxide, 2,5-dimethyl-2,5 di-(t-butylperoxy)hexane, t-butylperoxy isopropyl monocarbonate, and t-butyl peroxyacetate; and mixtures thereof. Additionally, specific examples of the organic azo compounds include 2,2'-azobisisobutyronitrile, 2,2'-azobis(4-methoxy-2,4-dimethylvaleronitrile, 2,2'-azobis(2,4-dimethylvaleronitrile), 2,2'-azobis-isobutylvaleronitrile, and 1,1'-azobis(1-cyclohexanecarbonitrile).

The amount in which the radical initiator can be used is not particularly limited, but is preferably in a range of 0.1 to 10 wt.%, and more preferably in a range of 0.5 to 5 wt.%, with respect to the total weight of the component (A) and the component (B).

When the component (A) comprises aliphatic unsaturated groups and the component (B) comprises aliphatic unsaturated groups, acryl groups, methacryl groups, or silicon-bonded hydrogen atoms, the amounts thereof are not particularly limited.
However, the content of the aliphatic unsaturated groups, acryl groups, or methacryl groups in the component (B) is in a range of 0.1 to 50 moles, preferably in a range of 0.1 to 30 moles, and more preferably in a range of 0.1 to 10 moles, per one mole of the aliphatic unsaturated groups in the component (A). A reason for this is because when the amount of the component (B) is less than the lower limit of the range described above, the carbonization yield when baking the obtained cured product will tend to decline. On the other hand, when the amount exceeds the range described above, the characteristics as an electrode active material of the silicon-containing carbon-based composite material obtained by baking the obtained cured product will tend to decline.

When forming the cured product obtained by crosslinking the component (A) and the component (B), the cured product is formed, for example, by manufacturing according to methods I and II described below, and then subjecting the product to a step of baking.
I: After mixing the component (A), the component (B), and, as necessary, (C) carbon or an organic material carbonized by heat treatment, the mixture is precured at a temperature not greater than 300°C, and preferably at a temperature between 60 and 300°C. At this stage, the subsequent baking step is preferably carried out after pulverizing the precured mixture so that an average diameter of particles thereof is from 0.1 to 30 µm and preferably from 1 to 20 µm.
II: Particularly, the cured product preferably used in the present invention is constituted by spherical particles. In order to form these spherical particles, for example, a crosslinkable composition comprising the component (A), the component (B), and, as necessary, the component (C) is preferably crosslinked by spraying said crosslinkable composition into hot air or by emulsifying said crosslinkable composition in an aqueous dispersing medium.

The carbon of the component (C) is elemental carbon, and specific examples thereof include activated carbon, natural graphite, artificial graphite, various coke powders, mesophase carbon fibers, vapor-grown carbon fibers, pitch-based carbon fibers, PAN-based carbon fibers (Polyacrylonitrile), various fired resin products, fired plant products, and similar carbons.

Specific examples of the organic material carbonized by heating (component (C)) include paraffin that is in a liquid or a wax-like state at room temperature; polyethylene, polypropylene, polystyrene, polymethyl methacrylate, urethane resins, AS resins, ABS resins, polyvinyl chloride, polyacetal, aromatic polycarbonate resins, aromatic polyester resins, coal tar, phenolic resins, epoxy resins, urea resins, melamine resins, fluoro resins, imide resins, urethane resins, furan resins, and mixtures thereof. Among these, aromatic polycarbonate resins, aromatic polyester resins, coal tar, phenolic resins, fluoro resins, imide resin, furan resins, and similar high molecular aromatic compounds and melamine resins are preferable. This is because forming a graphene structure is facilitated due to the excellent efficiency when carbonizing by heating.

While an amount of the component (C) used can be selected arbitrarily, from the perspectives of obtaining a high carbonization yield of the silicon-containing carbon-based composite material obtained by baking and superior performance as an electrode active material, the amount of the component (C) is preferably not more than 80 wt.% of the total weight of the component (A) and the component (B).

When the component (A) comprises aliphatic unsaturated groups and the component (B) comprises silicon-bonded hydrogen atoms, a fine particles of the cured product can be obtained by spraying a crosslinkable composition comprising the component (A), the component (B), and the hydrosilylation-reaction catalyst in particulate form into hot-air, and crosslinking by hydrosilylation reaction.

When the component (A) comprises aliphatic unsaturated groups and the component (B) comprises silicon-bonded hydrogen atoms, fine particles of the cured product can be formed by adding a crosslinkable composition comprising the component (A), the component (B), and the hydrosilylation-reaction catalyst to an aqueous solution of an emulsifier, emulsifying by agitation to form fine particles of the crosslinkable composition, and, thereafter, crosslinking by hydrosilylation reaction.

The emulsifier is not particularly limited, and specific examples thereof include ionic surfactants, nonionic surfactants, and mixtures of ionic surfactants and nonionic surfactants. Particularly, from the perspective of obtaining excellent uniform dispersion and stability of the oil-in-water emulsion produced by mixing the crosslinkable composition and water, the emulsifier is preferably a mixture of one or more types of ionic surfactant and one or more types of nonionic surfactant.

Moreover, by using silica (colloidal silica) or a metallic oxide such as titanium oxide in combination with the emulsifier and carbonizing while the silica is retained on the surface of the cured product particles, a stable layer can be formed on the carbon surface, carbonization yield can be increased, and surface oxidation occurring when allowing the carbon material to sit can be suppressed.

The diameter of the cured product particles is not particularly limited, but in order to form a silicon-containing carbon-based composite material, through baking, with an average diameter from 1 to 20 µm, which is suitable for a negative electrode active material, the average diameter is preferably in a range of 5 to 30 µm, and more preferably is in a range of 5 to 20 µm.

Because the crosslinking of the cured product particles obtained as described above can be further promoted and the carbonization yield via baking can be increased, the cured product particles are preferably further subjected to heat treating in air at a temperature from 150 to 300°C.

The silicon-containing carbon-based composite material is preferably prepared by, for example, baking a cured product of the component (A) and the component (B), a mixture of the cured product and the component (C), or a cured product of a mixture of the component (A), the component (B), and the component (C) in an inert gas or in-vacuo at a temperature from 300 to 1,500°C. Examples of the inert gas include nitrogen, helium, and argon. Note that the inert gas may comprise hydrogen gas or similar reducing gases.

The silicon-containing carbon-based composite material may be a baked product of the cured product of the component (A) and the component (B) itself, or may have a form where the baked product is dispersed in a continuous phase comprising a carbon phase derived from the component (C). Additionally, when compatibility between the cured product of the component (A) and the component (B), and the component (C) is low, the silicon-containing carbon-based composite material may have form in which a surface of the carbon phase derived from the component (C) is coated with the baked product of the cured product of the component (A) and the component (B).

When the surface of the silicon-containing carbon-based composite material comprises carbon derived from the component (C), an amount of the carbon is preferably from 1 to 50 wt.%, more preferably from 5 to 30 wt.%, and even more preferably from 5 to 20 wt.% of the silicon-containing carbon-based composite material. When the amount is within this range, even when using the silicon-containing carbon-based composite material alone as the electrode active material, the silicon-containing carbon-based composite material will have suitable conductivity, and declines in the charge and discharge capacity of the electrode can be suppressed.

The heating method of the carbonization furnace is not particularly limited, and carbonization can be carried out in a carbonization furnace of a fixed-bed type or a fluidized-bed type, provided that the furnace is capable of heating the product to an appropriate temperature. Specific examples of the carbonization furnace include Reidhammer, tunnel, and single type furnaces.

The silicon-containing carbon-based composite material obtained by the process described above can be expressed by the following average composition formula: Si_{1.00}C_{f}O_{g}Hₕ.
In this formula, "h", "f", and "g" are numbers that satisfy 0.5<f<100, 0≤g<5, and 0≤h<10, respectively. Preferably, 1.5<f<70, and more preferably, 2.0<f<50.

The surface of the silicon-containing carbon-based composite material obtained as described above may be further subjected to surface coating by carbon.

Any arbitrary carbon surface coating process may be used for coating the silicon-containing carbon-based composite material. For example, a carbon layer may be provided on the surface of the silicon-containing carbon-based composite material by performing thermal chemical vapor deposition at a temperature of not less than 800°C in a non-oxidation atmosphere. Moreover, by mixing the component (C) and the silicon-containing carbon-based composite material and then baking, a silicon-containing carbon-based composite material coated with a carbon phase derived from the component (C) can be obtained.

The apparatus used for the thermal chemical vapor deposition is not particularly limited provided that it has means for heating to not less than 800°C in a non-oxidation atmosphere, and may be appropriately selected depending on the purpose thereof. Apparatuses using continuous methods and/or batch methods can be used, and specific examples thereof include fluidized bed-furnaces, revolving furnaces, vertical moving bed furnaces, tunnel furnaces, batch furnaces, batch-type rotary kilns, and continuous rotary kilns.

Specific examples of the vapor deposition carbon source used in the thermal chemical vapor deposition include methane, ethane, ethylene, acetylene, propane, butane, butene, pentane, isobutane, hexane, and similar aliphatic hydrocarbons or mixtures thereof; benzene, divinylbenzene, monovinylbenzene, ethylvinylbenzene, toluene, xylene, styrene, ethylbenzene, diphenylmethane, naphthalene, phenol, cresol, nitrobenzene, chlorobenzene, indene, coumarone, pyridine, anthracene, phenanthrene, and similar aromatic hydrocarbons; gas light oil, creosote oil, anthracene oil, or cracked naphtha tar oil obtained in a tar distillation process; exhaust gas produced in the baking process; and mixtures thereof. Generally, methane or acetylene is used.

The non-oxidation atmosphere can be formed by introducing the vapor deposition carbon source gas or flash gas thereof; argon gas, helium gas, hydrogen gas, nitrogen gas, or similar non-oxidizing gases; or a gas mixture thereof into the thermal chemical vapor deposition apparatus.

Baking may be carried out in the same way when mixing the component (C) and the silicon-containing carbon-based composite material and then baking to obtain a silicon-containing carbon-based composite material coated with a carbon phase derived from the component (C). In this case, preferable examples of the component (C) are the same as those described above.

When coating the surface of the silicon-containing carbon-based composite material with carbon, an amount of the carbon applied is preferably from 1 to 50 wt.%, more preferably from 5 to 30 wt.%, and even more preferably from 5 to 20 wt.% of the weight of the silicon-containing carbon-based composite material. When the amount is within this range, even when using the silicon-containing carbon-based composite material alone as the electrode active material, the silicon-containing carbon-based composite material will have suitable conductivity, and declines in the charge and discharge capacity of the electrode can be suppressed.

The electrode active material comprising the silicon-containing carbon-based composite material obtained as described above has high reversible capacity and stable charge and discharge cycle characteristics, and can be used in the manufacturing of an electrode that has little electrical potential loss when lithium is discharged, via a simple manufacturing process. Thus, the electrode active material can be suitably used as an electrode active material for nonaqueous electrolyte secondary batteries. The electrode active material is particularly suitable as the active material of the negative electrode of lithium secondary batteries.

### Electrode

The electrode of the present invention is characterized by comprising the electrode active material described above. The form and method for fabricating the electrode are not particularly limited. Examples of the method for fabricating the electrode of the present invention include methods in which the electrode is fabricated by mixing the silicon-containing carbon-based composite material with a binder, and methods in which the electrode is fabricated by mixing the silicon-containing carbon-based composite material with a binder and a solvent, contact binding or coating the obtained paste on a current collector and, thereafter, drying the electrode. Moreover, a thickness of the paste coated on the current collector is, for example, about 30 to 500 µm and preferably about 50 to 300 µm. Means for drying after coating are not particularly limited, but heating under vacuum drying is preferable. A thickness of the electrode material on the current collector after drying is about 10 to 300 µm and preferably about 20 to 200 µm. When the silicon-containing carbon-based composite material is fibrous, the electrode can be fabricated by orienting the material in a single axial direction and forming the material into a fabric or similar structure, or bundling or weaving metal, conducting polymer, or similar conductive fibers. Terminals may be incorporated as necessary when forming the electrode.

The current collector is not particularly limited, and specific examples thereof include metal meshes and foils made from copper, nickel, alloys thereof, and the like.

Specific examples of the binder include fluorine-based (e.g. polyvinylidene fluoride and polytetrafluoroethylene) resins and styrene-butadiene resins. An amount in which the binder is used is not particularly limited, but a lower limit thereof is in a range of 5 to 30 parts by weight and preferably in a range of 5 to 20 parts by weight, per 100 parts by weight of the silicon-containing carbon-based composite material. When the amount of the binder used is outside these ranges, for example, bonding strength of the silicon-containing carbon-based composite material on the surface of the current collector will be insufficient; and an insulating layer, which is a cause of increased internal resistance of the electrode, may form. A method for preparing the paste is not particularly limited, and examples thereof include methods in which a mixed liquid (or dispersion) comprising the binder and an organic solvent is mixed with the silicon-containing carbon-based composite material.

A solvent that can dissolve or disperse the binder is generally used as the solvent, and specific examples thereof include N-methylpyrrolidone, N,N-dimethylformamide, and similar organic solvents. An amount in which the solvent is used is not particularly limited provided that when mixed with the binder, the mixture thereof has a paste-like form, but generally the amount is in a range of 0.01 to 500 parts by weight, preferably in a range of 0.01 to 400 parts by weight, and more preferably in a range of 0.01 to 300 parts by weight, per 100 parts by weight of the silicon-containing carbon-based composite material.

Additives may be compounded in the electrode of the present invention as desired. For example, a conductivity promoter may be added to the electrode during manufacturing. An amount in which the conductivity promoter is used is not particularly limited, but is in a range of 5 to 30 parts by weight and preferably in a range of 5 to 20 parts by weight, per 100 parts by weight of the silicon-containing carbon-based composite material. When the amount is within this range, conductivity will be excellent and declines in the charge and discharge capacity of the electrode can be suppressed.

Examples of the conductivity promoter include carbon blacks (e.g. ketjen black, acetylene black), carbon fibers, carbon nanotubes, and the like. A single conductivity promoter may be used or a combination of two or more types of conductivity promoters can be used. The conductivity promoter can, for example, be mixed with the paste comprising the silicon-containing carbon-based composite material, the binder, and the solvent.

When the surface of the silicon-containing carbon-based composite material is carbon surface-coated by thermal chemical vapor deposition or the like, an amount of the conductivity promoter compounded, together with the amount of carbon coated on the surface, is preferably 2 to 60 wt.%, more preferably 5 to 40 wt.%, and even more preferably 5 to 20 wt.% with respect to the weight of the silicon-containing carbon-based composite material. When the amount is within this range, conductivity will be excellent and declines in the charge and discharge capacity of the electrode can be suppressed.

Graphite or a similar negative electrode active material may be compounded in the electrode of the present invention as another optional additive.

### Electricity storage device

The electricity storage device of the present invention is characterized by comprising the electrode described above. Examples of the electricity storage device include lithium primary batteries, lithium secondary batteries, capacitors, hybrid capacitors (redox capacitors), organic radical batteries, and dual carbon batteries, of which lithium secondary batteries are preferable. The lithium secondary battery may be manufactured according to a generally known method using battery components including a negative electrode comprising the electrode described above, a positive electrode capable of storing and discharging lithium, an electrolyte solution, a separator, a current collector, a gasket, a sealing plate, a case, and the like.

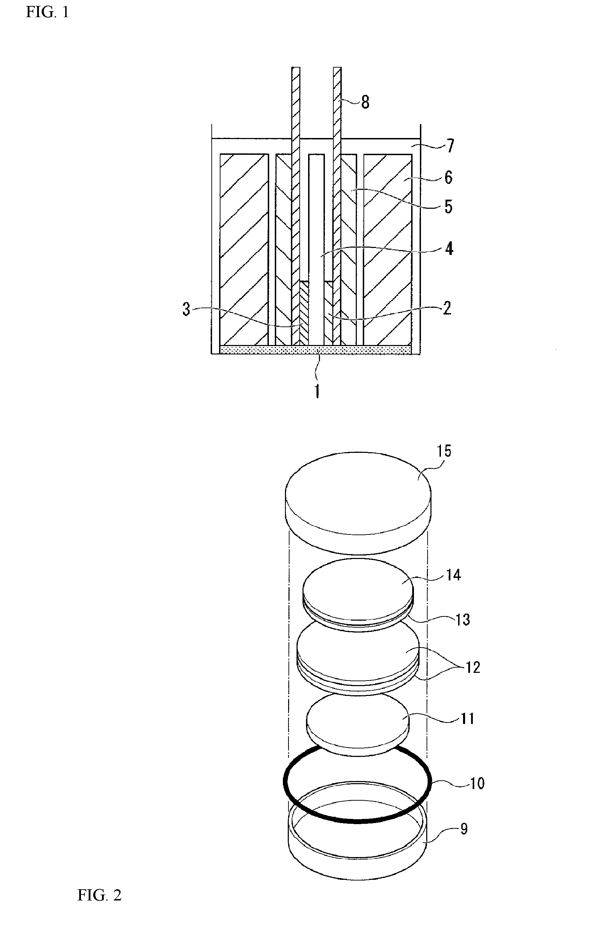

Preferable forms (lithium secondary batteries) of the battery of the present invention are illustrated in detail in FIGS. 1 and 2. FIG. 1 is a cross-sectional view illustrating an example of the battery (lithium secondary battery) of the present invention, fabricated according to the Practical Examples. A substantially cylindrical container is included in this lithium secondary battery. An appropriate amount of a molecular sieve 1 is disposed in a bottom of the container of this lithium secondary battery, but the molecular sieve 1 is optional. Additionally, in the lithium secondary battery, a separator 4 is disposed in a diameter direction thereof, and a positive electrode 2 and a negative electrode 3 that comprises the electrode formed from the silicon-containing carbon-based composite material are disposed respectively on each side of the separator 4. Current collectors 8, polypropylene plates 5, and polypropylene fillers 6 are disposed sequentially on outer sides of the positive electrode 2 and the negative electrode 3 toward the peripheral side of the container. However, the polypropylene plates 5 and the polypropylene fillers 6 are optional components.

The separator 4 is constituted by a pair of substantially flat plate-like members that are abutted against each other, having a predetermined dimension that is less than a height dimension of the container. However, a single member may alternately be used. The positive electrode 2 and the negative electrode 3 that each are abutted against the separator 4 are both constituted by substantially flat plate-like members that are smaller than the separator 4, and are disposed so as to be mutually opposing via the separator 4. The current collectors 8 that are abutted against the outer sides of the positive electrode 2 and the negative electrode 3 are constituted by a pair of flat plate-like members having a height that is greater than the height dimension of the container, and end portions thereof protrude from the container. The polypropylene plates 5 that are abutted against the outer sides of the current collectors 8 are constituted by a pair of substantially flat plate-like members having a height that is substantially the same as the height of the separator 4. Furthermore, the polypropylene fillers 6 that are disposed on the outer sides of the polypropylene plates 5, with a space therebetween, are constituted by a pair of substantially semi-cylindrical (partially cylindrical) members having a height that is substantially the same as the height of the separator 4. Moreover, an electrolyte solution 7 is stored in the container, and, in the container, only the ends of the current collectors 8 protrude from a liquid surface of the electrolyte solution 7. With the lithium secondary batteries of the Practical Examples, the polypropylene fillers 6 are provided as described above and, therefore, an amount of the electrolyte solution 7 used is reduced.

FIG. 2 is a breakdown perspective view of another lithium secondary battery (button battery) that is an example of the battery of the present invention, fabricated according to the Practical Examples. The lithium secondary battery illustrated in FIG. 2 comprises a cylindrical case 9, having a bottom and an open top face and housing sequentially from bottom to top an insulating packing 10, a positive electrode 11, a separator 12, a negative electrode 13 comprising the electrode including the silicon-containing carbon-based composite material, and a current collector 14. Axial centers of each of these components match. The insulating packing 10 is formed in a circular shape having a size that is substantially the same as that of the periphery of the case 9, and is attached to the case 9. The positive electrode 11 is formed in a substantially disc-like shape having a size that is slightly smaller than that of the inner circumference of the case 9. With this lithium secondary battery, the separator 12 is constituted by a pair disc-like members having a size that is substantially the same as that of the inner circumference of the case 9, but the separator 12 may alternately be constituted by a single disc-like member. An electrolyte solution is impregnated into the separator 12. The negative electrode 13 is formed in a substantially disc-like shape having a size substantially the same as that of the positive electrode 11, and is disposed so as to be opposite the positive electrode 11 via the separator 12. The current collector 14 is formed in a substantially disc-like shape having a size substantially the same as that of the negative electrode 13, and is bonded to the negative electrode 13. The current collector 14 is constituted by copper foil, nickel mesh, metal mesh, or the like. With such a configuration, a lid-like sealing plate 15, having an open underside, with a size that is slightly larger than the case 9 is attached to the case 9, and the lithium secondary battery is formed.

The positive electrodes 2 and 11 in the lithium secondary batteries illustrated in FIGS. 1 and 2 are not particularly limited and, for example, can be constituted by positive electrode current collectors, positive electrode active materials, conductive materials, and the like. Examples of the positive electrode current collectors include aluminum and the like. Examples of the positive electrode active materials include TiS₂, MoS₃, NbSe₃, FeS, VS₂, VSe₂ and similar metal chalcogenides having a layered structure; and CoO₂, Cr₃O₅, TiO₂, CuO, V₃O₆, Mo₃O, V₂O₅(·P₂O₅), Mn₂O(·Li₂O), LiCoO₂, LiNiO₂, LiMn₂O₄ and similar metal oxides. Of these, preferable positive electrode active materials are LiCoO₂, LiNiO₂, LiMn₂O₄ and similar lithium complex oxides. A single positive electrode active material may be used or a combination of two or more types of positive electrode active materials can be used. Examples of the conductive materials are the same as those described above.

The electrolyte solutions included in the lithium secondary batteries illustrated in FIGS. 1 and 2 are not particularly limited, and commonly known electrolyte solutions can be used. For example, a non-aqueous lithium secondary battery can be manufactured by using a solution in which an electrolyte is dissolved in an organic solvent as the electrolyte solution. Examples of the electrolyte include LiPF₆, LiClO₄, LiBF₄, LiClF₄, LiAsF₆, LiSbF₆, LiAlO₄, LiAlCl₄, LiCl, LiI, and similar lithium salts. Examples of the organic solvent include carbonates (e.g. propylene carbonate, ethylene carbonate, diethyl carbonate), lactones (e.g. γ-butyrolactone), chained ethers (e.g. 1,2-dimethoxyethane, dimethylether, diethylether), cyclic ethers (e.g. tetrahydrofuran, 2-methyltetrahydrofuran, dioxolane, 4-methyldioxolane), sulfolanes (e.g. sulfolane), sulfoxides (e.g. dimethyl sulfoxide), nitriles (e.g. acetonitrile, propionitrile, benzonitrile), amides (e.g. N,N-dimethylformamide, N,N-dimethylacetamide), polyoxyalkylene glycols (e.g. diethyleneglycol), and similar aprotic solvents. A single organic solvent may be used or a mixed solvent comprising two or more types of organic solvents can be used. A concentration of the electrolyte per one liter of the electrolyte solution is, for example, about 0.3 to 5 moles, preferably about 0.5 to 3 moles, and more preferably about 0.8 to 1.5 moles.

The separators 4 and 12 in the lithium secondary batteries illustrated in FIGS. 1 and 2 are not particularly limited, and a commonly known separator can be used. Examples thereof include porous polypropylene nonwovens, porous polyethylene nonwovens, and other polyolefin-based porous films.

The electricity storage device of the present invention is not limited to the examples illustrated in FIGS. 1 and 2 and, for example, can be applied to various forms such as stacked, packed, button, gum, battery pack, and rectangular batteries. Utilizing the characteristics of light-weight, high capacity, and high energy density, the electricity storage device of the present invention, particularly the lithium secondary battery, is suitable for use as a power supply for video cameras, computers, word processors, portable stereos, cellular phones, and other mobile, small electronic devices.

### EXAMPLES

Hereinafter the electrode active material, electrode, and electricity storage device of the present invention will be described in further detail using Practical Examples. In the Practical Examples, X-ray diffraction, scanning electron microscope, nitrogen gas desorption isotherm, X-ray photoelectron spectroscopy, and battery characteristics were evaluated as follows.

### X-ray diffraction

Device: RINT 2000 (manufactured by Rigaku Corporation)
X-ray generator: Target Cu
Tube voltage: 40 kV
Tube current: 40 mA
2θ=10-90
Divergence slit: 2/3°
Divergence height: 10 mm
Scattering slit: 2/3°
Receiving slit: 0.3 mm

### Scanning electron microscope

Device: JSM-5800LV (manufactured by JEOL Ltd.)

### Nitrogen gas desorption isotherm

Device: BELSORP-mini (manufactured by BEL Japan, Inc.)

### X-ray photoelectron spectroscopy

Device: ESCA-3400 (manufactured by Shimadzu Corporation)
X ray source: MgKα
Battery characteristics evaluation method
Charge and discharge characteristics of the lithium secondary battery using the silicon-containing carbon-based composite material of the present invention were measured as described below using an HJR-110mSM6 (manufactured by Hokuto Denko Corporation). The first cycle of charging and discharging was measured at a constant current of 0.1 C (37.2 mAh/g), which is 1/10 of 372 mAh/g, the theoretical capacity of graphite, per 1 g of the silicon-containing carbon-based composite material. The first charging was considered complete at the point when battery voltage declined to 0 V, and initial discharging capacity (mAh/g) was calculated at this point. The first discharging was considered complete at the point when battery voltage reached 3 V, and the initial discharging capacity (mAh/g) was calculated at this point. The battery was allowed to sit in an open circuit state for 30 minutes when switching between charging and discharging. From the second charging, charging was performed using a constant current of 0.5 C. The second charging was considered complete at the point when, the voltage became constant after the battery voltage reached 0.02 V, and the current value was 1/10. Additionally, discharging was performed at a constant current of 0.5 C and was considered complete when the battery voltage reached 1.5 V. The discharging capacity was calculated at this point. The cycle characteristics were evaluated under the same conditions. Initial charging and discharging efficiency (CE%) was expressed as a percentage (%) of the discharging capacity with respect to the charging capacity in the first cycle, and a capacity maintenance ratio after the cycle test was expressed as a percentage (%) of the charging capacity after a certain cycle with respect to the initial charging capacity.

### Practical Example 1

A crosslinkable composition was prepared by mixing 15.49 g of DVB570 (manufactured by Nippon Steel Chemical Co., Ltd.; Main components: divinylbenzene and vinyl ethylbenzene; proportion of divinylbenzene included in the main components: 60 wt.%); and 9.51 g of a methyl hydrogen siloxane copolymer capped at both molecular terminals with trimethylsiloxy groups (viscosity: 20 mPa·s; silicon-bonded hydrogen atoms content: 1.58 wt.%; included in an amount such that one mole of the silicon-bonded hydrogen atoms in the copolymer is included per one mole of vinyl groups in the DVB570). Thereafter, 87 g of an aqueous solution of 2.3 wt.%-polyoxyethylene secondary alkyl ether (Sanonic SS120, manufactured by Sanyo Chemical Industries, Ltd.; HLB=14.5) was added. Then, a water-based emulsion of the crosslinkable composition was prepared by emulsifying the mixture using a homo-disper (rotation speed: 500 rpm).

Next, a water-based emulsion of a platinum-based catalyst having a 1,3-divinyltetramethyl disiloxane platinum complex as a main component (average diameter of the platinum-based catalyst = 0.05 µm; platinum metal concentration = 0.05 wt.%) that was prepared separately was uniformly mixed with the water-based emulsion of the crosslinkable composition at an amount, in terms of weight, such that 20 ppm of platinum metal was included with respect to the crosslinkable composition, and mixed at 60°C for 60 minutes. Thereafter, cured product particles having an average diameter of 1 to 5 µm were prepared by removing the water.

The cured product particles were placed into an SSA-S grade alumina crucible and baked in a muffle furnace for two hours at 200°C in air, and then in a nitrogen atmosphere for two hours at 600°C followed by one hour at 1,000°C. After cooling, black particles were obtained at a 62% yield. Subjecting the particles to SEM observation revealed that these particles were spherical and had a particle diameter of about 1 to 5 µm. By subjecting the obtained particles to X-ray photoelectron spectroscopy (hereinafter referred to as "XPS"), it was confirmed that these spherical particles were a silicon-containing carbon-based composite material expressed by the average composition formula: C_{3.52}O_{1.43}Si_{1.00}. Furthermore, observation of the particles under the X-ray diffraction pattern (CuKα) showed a broad distinct diffraction peak originating from the amorphous structure of the SiOC ceramic at 2θ of near 20° and a diffraction peak originating from the graphene structure at 2θ of near 42°. BET specific surface area by nitrogen gas adsorption was 3.0 m²/g.

### Fabrication of the negative electrode body

107.58 parts by weight of the silicon-containing carbon-based composite material described above and 6.94 parts by weight of ketjen black were mixed for 15 minutes in a mortar. Thereafter, 12.00 parts by weight of polyvinylidene fluoride was added and the components were further stirred for 15 minutes. Then, N-methyl-2-pyrrolidone was mixed in as a solvent in order to obtain a slurry-like mixture, which was then coated on a copper foil roll at a thickness of about 250 µm by means of a doctor blade method. Thereafter, the coated foil roll was dried under vacuum for not less than 12 hours at 85°C, and a negative electrode body having a thickness of about 30 µm was obtained.

### Fabrication and evaluation of the lithium secondary battery

A lithium secondary battery having the structure illustrated in FIG. 2 was fabricated. Metallic lithium was used as the counterelectrode; a polypropylene nonwoven was used as the separator; the negative electrode body described above was used as the negative electrode; and a mixed solvent comprising ethylene carbonate and diethyl carbonate at a volume ratio of 1:1, in which lithium hexafluorophosphate was dissolved at a ratio of 1 mol/L, was used as the electrolyte solution. Then, the battery characteristics of the lithium secondary battery were evaluated according to the evaluation methods of battery characteristics described above. The battery characteristics are shown in Table 1.

### Practical Example 2

A crosslinkable composition was prepared by mixing 100 g of DVB570 (manufactured by Nippon Steel Chemical Co., Ltd.; Main components: divinylbenzene and vinyl ethylbenzene; proportion of divinylbenzene included in the main components: 60 wt.%); 153.4 g of a dimethylsiloxane-methyl hydrogen siloxane copolymer capped at both molecular terminals with trimethylsiloxy groups (viscosity: 45 mPa·s; silicon-bonded hydrogen atoms content: 0.76 wt.%; included in an amount such that one mole of the silicon-bonded hydrogen atoms in the copolymer is included per one mole of vinyl groups in the DVB570); an isopropyl alcohol solution of chloroplatinic acid (included in an amount such that, in terms of weight, 10 ppm of platinum metal was included with respect to the total weight of the DVB570 and the dimethylsiloxane-methyl hydrogen siloxane copolymer); and 0.1 g of 2-methyl-3-butyne-2-ol. Then, this mixture was sprayed using a rotating nozzle into a spray drier (diameter = 2 meters, height = 4 meters) having a hot-air entrance temperature of 200°C. Thereafter, product was collected from the spray drier using a cyclone. Thus, spherical cured product particles having a diameter of 10 to 150 µm were prepared.

The cured product particles were placed into an SSA-S grade alumina crucible and baked in a muffle furnace for two hours at 600°C in a nitrogen atmosphere, followed by one hour at 1,000°C. After cooling, black particles were obtained at a 60% yield. Additionally, by subjecting the obtained particles to XPS, it was confirmed that these particles were a silicon-containing carbon-based composite material expressed by the average composition formula: C_{2.66}O_{1.27}Si_{1.00}. Furthermore, observation of the particles under X-ray diffraction conditions (CuKα) in the XRD showed a broad distinct diffraction peak originating from the amorphous structure of the SiOC ceramic at 2θ of near 20° and a diffraction peak originating from the graphene structure at 2θ of near 42°.

Next, this silicon-containing carbon-based composite material was crushed in air for about 10 minutes using a zirconia bowl mill, and then sorted using a #300 mesh stainless steel screen. Thereby, a particulate silicon-containing carbon-based composite material having a maximum diameter of 50 µm was obtained.

### Fabrication of the negative electrode body

107.58 parts by weight of the silicon-containing carbon-based composite material described above and 6.94 parts by weight of ketjen black were mixed for 15 minutes in a mortar. Thereafter, 12.00 parts by weight of polyvinylidene fluoride was added and the components were further stirred for 15 minutes. Then, N-methyl-2-pyrrolidone was mixed in as a solvent in order to obtain a slurry-like mixture, which was then coated on a copper foil roll at a thickness of about 250 µm by means of a doctor blade method. Thereafter, the coated foil roll was dried under vacuum for not less than 12 hours at 110°C, and a negative electrode body having a thickness of about 30 µm was obtained.

### Fabrication and evaluation of the lithium secondary battery

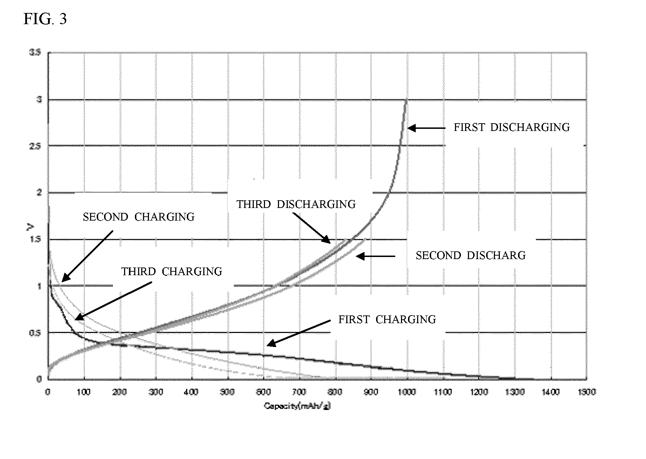

A lithium secondary battery having the structure illustrated in FIG. 1 was fabricated. Metallic lithium was used as the positive electrode 1; a polypropylene nonwoven was used as the separator 2; the negative electrode body described above was used as the negative electrode 3; and a mixed solvent comprising ethylene carbonate and diethyl carbonate at a volume ratio of 1:1, in which lithium perchlorate was dissolved at a ratio of 1 mol/L, was used as the electrolyte solution. Then, the battery characteristics of the lithium secondary battery were evaluated. The battery characteristics are shown in Table 1 and FIG. 3.

In FIG. 3, charging and discharging capacity (mAh/g) is shown on the horizontal axis and battery voltage (V) is shown on the vertical axis. The curves rising to the right are discharge curves. The dark solid line represents the initial discharge curve and the light solid lines represent the second and third discharge curves. The curves declining to the right are charge curves. The dark solid line represents the initial charge curve and the light solid lines represent the second and third charge curves.

### Practical Example 3

A crosslinkable composition was prepared by mixing 15.49 g of DVB570 (manufactured by Nippon Steel Chemical Co., Ltd.; Main components: divinylbenzene and vinyl ethylbenzene; proportion of divinylbenzene included in the main components: 60 wt.%); 4.75 g of a methyl hydrogen siloxane copolymer capped at both molecular terminals with trimethylsiloxy groups (viscosity: 20 mPa·s; silicon-bonded hydrogen atoms content: 1.58 wt.%; included in an amount such that 0.5 moles of the silicon-bonded hydrogen atoms in the copolymer is included per one mole of vinyl groups in the DVB570); and 1.5 g of 2,2'-azobis-isobutylvaleronitrile. Thereafter, 87 g of an aqueous solution of 2.3 wt.%-polyoxyethylene secondary alkyl ether (Sanonic SS120, manufactured by Sanyo Chemical Industries, Ltd.; HLB=14.5) was added. Then, a water-based emulsion of the crosslinkable composition was prepared by emulsifying the mixture using a homo-disper (rotation speed: 500 rpm).

Next, a water-based emulsion of a platinum-based catalyst having a 1,3-divinyltetramethyl disiloxane platinum complex as a main component (average diameter of the platinum-based catalyst = 0.05 µm; platinum metal concentration = 0.05 wt.%) that was prepared separately was uniformly mixed with the water-based emulsion of the crosslinkable composition at an amount, in terms of weight, such that 20 ppm of platinum metal was included with respect to the crosslinkable composition, and mixed at 60°C for 120 minutes. Thereafter, cured product particles having an average diameter from about 10 to 20 µm were prepared by removing the water.

The cured product particles were placed into an SSA-S grade alumina crucible and heat treated in a muffle furnace for two hours at 200°C in air, and then baked in a nitrogen atmosphere for two hours at 600°C followed by one hour at 1,000°C. After cooling, black particles were obtained at a 65% yield. SEM observation of the obtained particles showed that the particles had a spherical form with an average diameter of from about 10 to 20 µm. By subjecting the obtained particles to XPS, it was confirmed that these spherical particles were a silicon-containing carbon-based composite material expressed by the average composition formula: C_{3.70}O_{1.20}Si_{1.00}. Furthermore, observation of the spherical particles under X-ray diffraction conditions (CuKα) in the XRD showed a broad distinct diffraction peak originating from the amorphous structure of the SiOC ceramic at 2θ of near 20° and a diffraction peak originating from the graphene structure at 2θ of near 42°.

Fabrication of the negative electrode body and lithium secondary battery, and evaluation of the battery
Other than using 104.77 parts by weight of the silicon-containing carbon-based composite material prepared as described in this Practical Example, 9.01 parts by weight of the ketjen black, and 8.91 parts by weight of polyvinylidene fluoride in place of the amounts used in Practical Example 1, the negative electrode body was fabricated the same as in Practical Example 1. A lithium secondary battery was fabricated using this negative electrode body, the same as in Practical Example 1, and evaluated. Results of the evaluation are shown in Table 1.

### Practical Example 4

A crosslinkable composition was prepared by mixing 100 g of DVB630 (manufactured by Nippon Steel Chemical Co., Ltd.; Main components: divinylbenzene and vinyl ethylbenzene; proportion of divinylbenzene included in the main components: 63.6 wt.%); 153.4 g of a dimethylsiloxane-methyl hydrogen siloxane copolymer capped at both molecular terminals with trimethylsiloxy groups (viscosity: 45 mPa·s; silicon-bonded hydrogen atoms content: 0.76 wt.%; included in an amount such that one mole of the silicon-bonded hydrogen atoms in the copolymer is included per one mole of vinyl groups in the DVB630); an isopropyl alcohol solution of chloroplatinic acid (included in an amount such that 10 ppm of platinum was included with respect to the total weight of the DVB630 and the dimethylsiloxane-methyl hydrogen siloxane copolymer); and 0.1 g of 2-methyl-3-butyne-2-ol. This mixture was precured at a temperature of 80°C and then cured in air for 60 minutes at 200°C. Thereafter, the cured product was cooled and crushed using a pulverizer having a clearance set to 20 µm. Thereby, particles having an average diameter of about 15 µm were obtained.

### Preparation of the silicon-containing carbon-based composite material

The prepared cured product particles were placed into an SSA-S grade alumina crucible and baked in a muffle furnace for two hours at 600°C in a nitrogen atmosphere, followed by one hour at 1,000°C. After cooling, black particles were obtained at a 72% yield. Additionally, by subjecting the obtained particles to XPS, it was confirmed that these particles were a silicon-containing carbon-based composite material expressed by the average composition formula: C_{2.40}O_{1.26}Si_{1.00}. Moreover, observation of the particles under X-ray diffraction conditions (CuKα) in the XRD showed a broad distinct diffraction peak originating from the amorphous structure of the SiOC ceramic at 2θ of near 20° and a diffraction peak originating from the graphene structure at 2θ near 42°.

### Fabrication of the negative electrode body and lithium secondary battery, and evaluation of the battery

Other than using 104.77 parts by weight of the silicon-containing carbon-based composite material prepared as described in this Practical Example, 9.01 parts by weight of the ketjen black, and 8.91 parts by weight of polyvinylidene fluoride in place of the amounts used in Practical Example 1, the negative electrode body was fabricated the same as in Practical Example 1. A lithium secondary battery was fabricated using this negative electrode body, the same as in Practical Example 1, and evaluated. The battery characteristics are shown in Table 1.

### Practical Example 5

60 g of coal tar pitch; 39.6 g of 1,5-hexadiene; 60.4 g of a methyl hydrogen siloxane copolymer capped at both molecular terminals with trimethylsiloxy groups (viscosity: 20 mPa·s; silicon-bonded hydrogen atoms content: 1.58 wt.%; included in an amount such that 0.8 moles of the silicon-bonded hydrogen atoms in the copolymer is included per one mole of vinyl groups in the hexadiene); an isopropyl alcohol solution of chloroplatinic acid (included in an amount such that 20 ppm of platinum was included with respect to the total weight of the hexadiene and the methyl hydrogen siloxane copolymer); and 0.1 g of of 2-methyl-3-butyne-2-ol were placed into a Labo Plastomill and mixed. This mixture was precured at a temperature of 100°C and then cured for 60 minutes at 200°C. Thereafter, the cured product was cooled and crushed using a pulverizer having a clearance set to 20 µm. Thereby, particles having an average diameter of about 15 µm were prepared.

### Preparation of the silicon-containing carbon-based composite material

The cured product particles were placed into an SSA-S grade alumina crucible and baked in a muffle furnace for two hours at 600°C in a nitrogen atmosphere, followed by one hour at 1,000°C. After cooling, black particles were obtained at a 62% yield. Additionally, by subjecting the obtained particles to XPS, it was confirmed that these particles were a silicon-containing carbon-based composite material expressed by the average composition formula: C_{10.00}O_{1.26}Si_{1.00}. Furthermore, observation of the particles under X-ray diffraction conditions (CuKα) in the XRD showed a broad distinct diffraction peak originating from the amorphous structure of the SiOC ceramic at 2θ of near 24° and a diffraction peak originating from the graphene structure at 2θ of near 42°.

### Fabrication of the negative electrode body and lithium secondary battery, and evaluation of the battery

Other than using 104.77 parts by weight of the silicon-containing carbon-based composite material prepared as described in this Practical Example, 9.01 parts by weight of the ketjen black, and 8.91 parts by weight of polyvinylidene fluoride in place of the amounts used in Practical Example 1, the negative electrode body was fabricated the same as in Practical Example 1. A lithium secondary battery was fabricated using this negative electrode body, the same as in Practical Example 1, and evaluated. The battery characteristics are shown in Table 1.

### Practical Example 6

8.3 g of spherical artificial graphite (MCMB6-28, manufactured by Osaka Gas Chemicals Co., Ltd.; average diameter = 6 µm); 15.49 g of DVB570 (manufactured by Nippon Steel Chemical Co., Ltd.; Main components: divinylbenzene and vinyl ethylbenzene; proportion of divinylbenzene included in the main components: 60 wt.%); 9.51 g of a methyl hydrogen siloxane copolymer capped at both molecular terminals with trimethylsiloxy groups (viscosity: 20 mPa·s; silicon-bonded hydrogen atoms content: 1.58 wt.%; included in an amount such that one mole of the silicon-bonded hydrogen atoms in the copolymer is included per one mole of vinyl groups in the DVB570); an isopropyl alcohol solution of chloroplatinic acid (included in an amount such that 20 ppm of platinum was included with respect to the total weight of the DVB570 and the methyl hydrogen siloxane copolymer); and 0.1 g of 2-methyl-3-butyne-2-ol were mixed. Thereafter, this mixture was precured at a temperature of 80°C and then cured for 30 minutes at 200°C. Thereafter, the cured product was cooled and crushed using a pulverizer having a clearance set to 20 µm. Thereby, particles having an average diameter of about 15 µm were obtained.

### Preparation of the silicon-containing carbon-based composite material

The prepared cured product particles were placed into an SSA-S grade alumina crucible and baked in a muffle furnace for two hours at 600°C in a nitrogen atmosphere, followed by one hour at 1,000°C. After cooling, black particles were obtained at a 78% yield. Furthermore, observation of the particles under X-ray diffraction conditions (CuKα) in the XRD showed a broad diffraction peak originating from the amorphous structure of the SiOC ceramic at 2θ of near 20° and a distinct diffraction peaks originating from the graphene structure at 26.1°, 44.7°, 54.4°, and 77.6°.

### Fabrication of the negative electrode body and lithium secondary battery, and evaluation of the battery

Other than using 104.77 parts by weight of the silicon-containing carbon-based composite material prepared as described in this Practical Example, 9.01 parts by weight of the ketjen black, and 8.91 parts by weight of polyvinylidene fluoride in place of the amounts used in Practical Example 1, the negative electrode body was fabricated the same as in Practical Example 1. A lithium secondary battery was fabricated using this negative electrode body, the same as in Practical Example 1, and evaluated. The battery characteristics are shown in Table 1.

### Practical Example 7

25 g of polystyrene at a degree of polymerization of about 2,000; 15.49 g of DVB570 (manufactured by Nippon Steel Chemical Co., Ltd.; Main components: divinylbenzene and vinyl ethylbenzene; proportion of divinylbenzene included in the main components: 60 wt.%); and 9.51 g of a methyl hydrogen siloxane copolymer capped at both molecular terminals with trimethylsiloxy groups (viscosity: 20 mPa·s; silicon-bonded hydrogen atoms content: 1.58 wt.%; included in an amount such that one mole of the silicon-bonded hydrogen atoms in the copolymer is included per one mole of vinyl groups in the DVB570) were thoroughly mixed at 100°C in a Labo Plastomill. Next, while mixing at 100°C, a 1,3-divinyltetramethyl disiloxane platinum complex (included in an amount such that, in terms of weight units, 20 ppm of platinum metal was included with respect to the total weight of the DVB570 and the methyl hydrogen siloxane copolymer) was added. Then, the mixture was stirred for 10 minutes at 180°C, and a mixture was obtained.

The prepared mixture was placed into an SSA-S grade alumina crucible and baked in a muffle furnace for two hours at 600°C in a nitrogen atmosphere, followed by one hour at 1,000°C. After cooling, black particles were obtained at a 32% yield. The obtained black particles were crushed using a pulverizer having a clearance set to 20 µm. Thereby, particles having an average diameter of about 15 µm were obtained. Additionally, by subjecting the obtained black particles to XPS, it was confirmed that these particles were a silicon-containing carbon-based composite material expressed by the average composition formula: C_{2.66}O_{1.27}Si_{1.00}. Moreover, observation of the obtained black particles under X-ray diffraction conditions (CuKα) in the XRD showed a broad diffraction peak originating from the amorphous structure of the SiOC ceramic at 2θ of near 20° and a diffraction peak originating from the graphene structure at 2θ near 42°.

### Fabrication of the negative electrode body and lithium secondary battery, and evaluation of the battery

Other than using 104.77 parts by weight of the silicon-containing carbon-based composite material prepared as described in this Practical Example, 9.01 parts by weight of the ketjen black, and 8.91 parts by weight of polyvinylidene fluoride in place of the amounts used in Practical Example 1, the negative electrode body was fabricated the same as in Practical Example 1. A lithium secondary battery was fabricated using this negative electrode body, the same as in Practical Example 1, and evaluated. The battery characteristics are shown in Table 1.

### Comparative Example 1

A crosslinkable silicone composition was prepared by mixing 9.0 g of 1,3,5,7-tetramethyl-1,3,5,7-tetravinyl cyclotetrasiloxane (viscosity = 3.1 mPa·s); and 9.5 g of a methyl hydrogen siloxane polymer capped at both molecular terminals with trimethylsiloxy groups (viscosity: 20 mPa·s; silicon-bonded hydrogen atoms content: 1.58 wt.%; included in an amount such that one mole of the silicon-bonded hydrogen atoms in the polymer is included per one mole of vinyl groups in the cyclotetrasiloxane). Thereafter, 87 g of an aqueous solution of 2.3 wt.%-polyoxyethylene secondary alkyl ether (Sanonic SS120, manufactured by Sanyo Chemical Industries, Ltd.; HLB=14.5) was added. Then, a water-based emulsion of the crosslinkable silicone composition was prepared by emulsifying the mixture using a homo-disper (rotation speed: 500 rpm).

Next, a water-based emulsion of a platinum-based catalyst having a 1,3-divinyltetramethyl disiloxane platinum complex as a main component (average diameter of the platinum-based catalyst = 0.05 µm; platinum metal concentration = 0.05 wt.%) that was prepared separately was uniformly mixed with the water-based emulsion of the crosslinkable silicone composition at an amount, in terms of weight, of such that 20 ppm of platinum metal was included with respect to the dimethylpolysiloxane capped at both molecular terminals with dimethylvinylsiloxy groups in the emulsion. After agitating this water-based dispersion for 10 minutes at 80°C, a portion thereof was extracted. Then, the water was removed and crosslinked silicone particles were obtained. These crosslinked silicone particles had a diameter of about 20 µm, a homogeneous structure, and were not sticky.

The prepared crosslinked silicone particles were placed into an SSA-S grade alumina crucible and baked in a muffle furnace for two hours at 600°C in a nitrogen atmosphere, followed by one hour at 1,000°C. After cooling, black particles were obtained at a 72% yield. SEM observation of the obtained black particles showed that the particles had a spherical form with an average diameter of about 20 µm. By subjecting the obtained particles to XPS, it was confirmed that these spherical particles were a silicon-containing carbon-based composite material expressed by the average composition formula: C_{1.71}O_{1.83}Si_{1.00}. Moreover, observation of the particles under X-ray diffraction conditions (CuKα) in the XRD showed that while a broad distinct diffraction peak originating from the amorphous structure of the SiOC ceramic at 2θ of near 24° was detected, a diffraction peak originating from graphene was not detected.

Fabrication of the negative electrode body and lithium secondary battery, and evaluation of the battery
Other than using 104.77 parts by weight of the silicon-containing carbon-based composite material prepared as described in this Practical Example, 9.01 parts by weight of the ketjen black, and 8.91 parts by weight of polyvinylidene fluoride in place of the amounts used in Practical Example 1, the negative electrode body was fabricated the same as in Practical Example 1. A lithium secondary battery was fabricated using this negative electrode body, the same as in Practical Example 1, and evaluated. The battery characteristics are shown in Table 1.

**Table 1**

| | Practical Example 1 | Practical Example 2 | Practical Example 3 | Practical Example 4 | Practical Example 5 | Practical Example 6 | Practical Example 7 | Comparative Example 1 |
|---|---|---|---|---|---|---|---|---|
| Initial charging capacity (mAh/g) | 1162 | 1369 | 1336 | 1178 | 1020 | 1042 | 980 | 1363 |
| Initial discharging capacity (mAh/g) | 820 | 996 | 968 | 836 | 746 | 773 | 735 | 674 |
| CE% | 71 | 73 | 72 | 71 | 73 | 74 | 75 | 49 |
| Capacity maintenance ratio (%) | | | | | | | | |
| After 10 cycles | - | 88 | - | - | 87 | 92 | 89 | - |
| After 20 cycles | 74 | 78 | 74 | 74 | 81 | 89 | 83 | 42 |
| After 40 cycles | - | 62 | - | - | 74 | 72 | 72 | - |

### Practical Example 8

The silicon-containing carbon-based composite material prepared in Practical Example 4 were subjected to thermal chemical vapor deposition for two hours at 1,000°C using a batch-type rotary kiln (inside diameter: Approx. ϕ300 mm × 600 mm), under a stream of a methane-argon gas mixture. An amount of carbon coated on the surface of the obtained carbon surface-coated silicon-containing carbon-based composite material was 30 wt.% of the silicon-containing carbon-based composite material. The obtained carbon surface-coated silicon-containing carbon-based composite material was used to fabricate a negative electrode body, the same as in Practical Example 4. A lithium-ion secondary battery was fabricated using the fabricated negative electrode body, the same as in Practical Example 1, and evaluated. The battery characteristics are shown in Table 2.

**Table 2**

| | Practical Example 8 |
|---|---|
| Initial charging capacity | 1082 |
| (mAh/g) | |
| Initial discharging capacity (mAh/g) | 822 |
| CE% | 76 |
| Capacity maintenance ratio (%) | |
| After 10 cycles | 95 |
| After 20 cycles | 90 |
| After 40 cycles | 90 |

### INDUSTRIAL APPLICABII,ITY

The electrode active material of the present invention can be suitably used as an electrode active material for electricity storage devices, especially for lithium secondary batteries. Additionally, an electrode including the electrode active material of the present invention, particularly a lithium secondary battery provided with a negative electrode, has excellent reversible capacity and charge and discharge cycle characteristics, and has little electrical potential loss when lithium is discharged.

## Claims

1. An electrode active material comprising a silicon-containing carbon-based composite material obtained by: preparing a cured product by crosslinking (A) a silicon-free organic compound having a crosslinkable group, and (B) a silicon-containing compound capable of crosslinking the component (A); and baking the cured product in an inert gas or in a vacuum at 300 to 1,500°C.

2. The electrode active material of claim 1, wherein the component (A) has a crosslinkable group selected from aliphatic unsaturated groups, epoxy groups, acryl groups, methacryl groups, amino groups, hydroxyl groups, mercapto groups, or halogenated alkyl groups.

3. The electrode active material of claim 1, wherein the component (A) is an organic compound having at least one aromatic group.

4. The electrode active material of claim 1, wherein the component (A) is an organic compound expressed by the general formula:
(R¹)ₓR²
wherein R¹ is a crosslinkable group; "x" is an integer greater than or equal to 1; and R² is an aromatic group with "x" valency.

5. The electrode active material of claim 1, wherein the component (B) is a siloxane, a silane, a silazane, a carbosilane, or a mixture thereof

6. The electrode active material of claim 1, wherein the component (B) is a siloxane expressed by the average unit formula:
(R³₃SiO_{1/2})ₐ(R³₂SiO_{2/2})_{b}(R³SiO_{3/2})_{c}(SiO_{4/2})_{d}
wherein R³ are the same or different and are selected from monovalent hydrocarbon groups, hydrogen atoms, halogen atoms, epoxy group-containing organic groups, acryl group- or methacryl group-containing organic groups, amino group-containing organic groups, mercapto group-containing organic groups, alkoxy groups, and hydroxy groups; "a", "b", "c", and "d" are numbers that are greater than or equal to 0 and less than or equal to 1, and that satisfy a + b + c+ d = 1; however, "a", "b" and "c" cannot be 0 at the same time.

7. The electrode active material of claim 1, wherein the component (A) and the component (B) are crosslinked by means of an addition reaction, a condensation reaction, a ring-opening reaction, or a radical reaction.

8. The electrode active material of claim 1, wherein the cured product is obtained by a hydrosilylation reaction of the component (A) having aliphatic unsaturated groups and the component (B) having silicon-bonded hydrogen atoms.

9. The electrode active material of claim 1, wherein the cured product is obtained by a radical reaction of the component (A) including aliphatic unsaturated groups and the component (B) including aliphatic unsaturated groups, acryl groups, methacryl groups, or silicon-bonded hydrogen atoms.

10. The electrode active material of claim 1, wherein the cured product is obtained by crosslinking a mixture comprising the component (A), the component (B), and (C) carbon or an organic material that is carbonized by heating.

11. The electrode active material of claim 1, wherein the silicon-containing carbon-based composite material is obtained by baking a mixture comprising the cured product obtained by crosslinking the component (A) and the component (B), and a component (C).

12. The electrode active material of claim 1, wherein the silicon-containing carbon-based composite material is a particulate material having an average diameter of 5 nm to 50 µm.

13. The electrode active material of claim 1, wherein the silicon-containing carbon-based composite material is carbon surface-coated.

14. The electrode active material of claim 13, wherein the silicon-containing carbon-based composite material is carbon surface-coated by thermal chemical vapor deposition.

15. An electrode comprising the electrode active material of any one of claims 1 to 14.

16. An electricity storage device comprising the electrode of claim 15.

17. The electricity storage device of claim 16, which is a lithium secondary battery.
